(19) Europäisches Patentamt

European Patent Office

Office européen des brevets

(11) **EP 1 299 256 B1**

(12) **FASCICULE DE BREVET EUROPEEN**

(45) Date de publication et mention
de la délivrance du brevet:
**26.04.2006 Bulletin 2006/17**

(21) Numéro de dépôt: **01965035.7**

(22) Date de dépôt: **25.06.2001**

(51) Int Cl.:
***B60C 19/00*** *(2006.01)*

(86) Numéro de dépôt international:
**PCT/EP2001/007223**

(87) Numéro de publication internationale:
**WO 2002/000456 (03.01.2002 Gazette 2002/01)**

(54) **PNEUMATIQUE D'AVION A BOURRELET PERFECTIONNE**

FLUGZEUGREIFEN MIT VERBESSERTEM WULST

AIRCRAFT TYRE WITH IMPROVED TYRE BEAD

(84) Etats contractants désignés:
**AT BE CH CY DE DK ES FI FR GB GR IE IT LI LU
MC NL PT SE TR**

(30) Priorité: **29.06.2000 FR 0008450**

(43) Date de publication de la demande:
**09.04.2003 Bulletin 2003/15**

(73) Titulaires:
• **Société de Technologie Michelin
63000 Clermont-Ferrand Cedex 09 (FR)**
• **MICHELIN RECHERCHE ET TECHNIQUE S.A.
CH-1763 Granges-Paccot (CH)**

(72) Inventeurs:
• **HERBELLEAU, Yves
F-63200 Riom (FR)**

• **GUERINON, Bernard
F-63100 Clermont-Ferrand (FR)**
• **ROUX, Pierre
F-63000 Clermont-Ferrand (FR)**

(74) Mandataire: **Le Cam, Stéphane Georges Elie
M.F.P. Michelin,
SGD/LG/PI - F 35 - Ladoux
63040 Clermont-Ferrand Cedex 09 (FR)**

(56) Documents cités:
**EP-A- 0 329 592         EP-A- 0 664 232
WO-A-01/36219          WO-A-98/54006
FR-A- 2 771 050**

EP 1 299 256 B1

## Description

L'invention concerne un pneumatique, destiné à porter de lourdes charges et gonflé à très haute pression, supérieure à 12 bars, tel que par exemple un pneumatique d'avion.

Le brevet US 4,832102 décrit un pneumatique d'avion comprenant un sommet, deux flancs et deux bourrelets, une armature de carcasse et une armature de sommet dans lequel l'armature de carcasse comprend deux alignements circonférentiels de renforts de haut module d'élasticité, ancrés dans les deux bourrelets, et l'armature de sommet comprend au moins un bloc de travail avec au moins une nappe de renforts de haut module d'élasticité. L'armature de carcasse est ancrée dans les bourrelets par le retournement, autour d'une tringle, des deux alignements circonférentiels de premiers renforts de haut module d'élasticité.

Le brevet FR-A-2771050 décrit un pneumatique d'avion dans lequel, chaque bourrelet est dépourvu de tringle, et dans lequel l'armature de carcasse présente dans chaque bourrelet un profil méridien courbé, ladite armature de carcasse étant renforcée par des nappes additionnelles, formée d'éléments de renforcement orientés sensiblement circonférentiellement. Le profil courbé de la nappe carcasse associé à un empilement de nappes dans la zone du bourrelet conduit à une réalisation complexe qui augmente notamment le temps de fabrication et donc les coûts.

L'invention a pour objet un pneumatique pour avion dont l'ancrage de l'armature de carcasse est perfectionnée. Ce but est atteint avec un pneumatique ayant les caractéristiques de la revendication 1.

Dans ce qui suit, on entend par titre, la masse en grammes de mille mètres d'un renfort. Le titre est exprimé en tex. La contrainte subie par un renfort ou le module de ce renfort sont exprimés en « cN/tex », cN voulant dire centi-newton.

On entend par « renfort » (« reinforcing thread ») tout élément de renforcement sous forme d'un fil, susceptible de renforcer une matrice déterminée, par exemple une matrice de caoutchouc. A titre de renforts, on citera par exemple des fibres multifilamentaires (« multifilament yarns »), ces fibres pouvant être tordues ou non sur elles-mêmes, des fils unitaires tels que des monofils de diamètre élémentaire élevé, avec ou sans torsion sur eux-mêmes, des câblés ou des retors (« cords ») obtenus par des opérations de câblage ou retordage de ces fils unitaires ou de ces fibres, de tels renforts pouvant être hybrides, c'est-à-dire composites, comportant des éléments de natures différentes.

On entend par « retors » (« plied yarn » ou « folded yarn ») un renfort constitué par deux brins (« single yarns ») ou plus assemblés ensemble par des opérations de retordage ; ces brins, généralement formés de fibres multifilamentaires, sont d'abord retordus individuellement dans un sens (direction de torsion S ou Z) au cours d'une première étape de retordage, puis tordus ensemble en sens inverse (direction de torsion Z ou S, respectivement) au cours d'une seconde étape de retordage.

On entend par « renfort adhérisé » un renfort ayant subi un traitement d'enduction approprié, dit d'encollage ou d'adhérisation, susceptible de faire adhérer ce renfort, après un traitement thermique approprié, à la matrice à laquelle il est destiné.

On entend par « axiale » une direction parallèle à l'axe A du pneumatique ; cette direction peut être « axialement intérieure » lorsqu'elle est dirigée vers l'intérieur du pneumatique et « axialement extérieure » lorsqu'elle est dirigée vers l'extérieur du pneumatique.

On entend par « radiale » une direction perpendiculaire à l'axe A du pneumatique et passant par cet axe A. Cette direction peut être «radialement intérieure » ou « radialement extérieure » selon qu'elle se dirige vers l'axe A ou vers l'extérieur du pneumatique.

On entend par « module d'élasticité » d'un mélange caoutchoutique un module sécant d'extension à 10 % de déformation et à température ambiante.

Le pneumatique pour avion selon l'invention dont la pression de gonflage est supérieure à 12 bars comprend un sommet, deux flancs et deux bourrelets, une armature de carcasse ancrée dans les deux bourrelets et une armature de sommet. Ce pneumatique est tel que l'armature de carcasse comprend deux ou trois alignements circonférentiels de premiers renforts de haut module d'élasticité et tel que les moyens d'ancrage des premiers renforts dans chaque bourrelet comprennent des seconds renforts orientés circonférentiellement bordant axialement les alignements circonférentiels des premiers renforts, les premiers renforts et seconds renforts étant séparés par une couche de mélange de très haut module d'élasticité.

Les premiers renforts ont, de préférence, un module sécant d'extension supérieur à 1000 cN/Tex et de tels renforts sont, par exemple, constitués de polyamide aromatique.

La couche de mélange de très haut module d'élasticité a un module sécant d'extension à 10 % supérieur à 20 MPa et de préférence supérieur à 30 MPa. Cette couche peut aussi avoir une dureté shore A supérieure à 70.

Les pneumatiques pour avion doivent résister à des conditions en service extrêmes, notamment en termes de charge appliquée et de vitesse compte tenu de leur poids et de leur taille faibles. Il en résulte, en dépit de leurs pressions de gonflage très élevées, supérieures à 12 bars, que leur écrasement ou flèche en service peut atteindre couramment des valeurs doubles de celles observées pour des pneumatiques poids lourds ou de tourisme.

Lors des décollages, des vitesses très élevées, de l'ordre de 350 km/heure, sont atteintes d'où des conditions d'échauffement aussi très sévères.

Toutes ces conditions sont particulièrement pénalisantes pour l'endurance des bourrelets de ces pneumatiques.

De façon très surprenante, la demanderesse a constaté que le fait d'avoir remplacé, dans le pneumatique selon l'invention, un ancrage de l'armature de carcasse avec un retournement autour d'une tringle par un ancrage au moyen de renforts circonférentiels couplés aux renforts de l'armature de la carcasse par une couche de mélange de très haut module d'élasticité n'entraînait pas de déchéance de cette structure, au contraire.

De telles structures d'ancrage sont déjà connu, notamment par les brevets EP 0 582 196 ou EP 0 664 232. Mais ces structures avaient été définies pour des pneumatiques de tourisme dont les conditions de sollicitation en service sont beaucoup moins sévères.

L'armature de carcasse des pneumatiques selon l'invention comprend deux ou trois alignements circonférentiels de renforts de haut module d'élasticité, en polyamide aromatique, par exemple.

Deux alignements circonférentiels sont nécessaires pour résister aux très fortes sollicitations mécaniques subies, mais il ne faut pas dépasser trois alignements pour ne pas augmenter de façon dommageable la rigidité en flexion des flancs.

De façon avantageuse, chaque alignement circonférentiel des premiers renforts est, dans chaque bourrelet, bordé axialement intérieurement et axialement extérieurement par des seconds renforts orientés circonférentiellement.

Les seconds renforts ont, de préférence, un module d'extension supérieur à celui des premiers renforts. Ils sont préférentiellement choisis dans le groupe des renforts de carbone, de tungstène, d'aramide haut module ou d'acier.

Selon un mode de réalisation avantageux, les seconds renforts des moyens d'ancrage sont constitués de monofilaments ou fils unitaires d'acier. Ces monofilaments peuvent avoir un diamètre compris entre 0,7 et 1,3 mm. Lorsque leur diamètre dépasse 1,3 mm, leur mise en oeuvre devient difficile car le renfort n'est plus assez flexible, lorsque leur diamètre diminue en dessous de 0,7 mm, la durée de leur application devient trop longue.

L'utilisation de ces monofilaments a l'avantage d'obtenir, pour une rigidité de ces seconds renforts donnée, une forte compacité de la structure du bourrelet. Le coût de ces monofilaments est aussi très réduit relativement à celui des câbles métalliques usuellement utilisés dans l'industrie du pneumatique.

Selon une autre caractéristique du pneumatique selon l'invention, en considérant $\Sigma R_I$ somme des rigidités d'extension des seconds renforts disposés axialement intérieurement relativement à l'armature de carcasse et en considérant $\Sigma R_E$ somme des rigidités d'extension des seconds renforts disposés axialement de part et d'autre de l'armature de carcasse, on a :

$$0,6 \leq \frac{\sum R_I}{\sum R_E} \leq 1,5$$

et de préférence :

$$0,7 \leq \frac{\sum R_I}{\sum R_E} \leq 1,3$$

Le respect de ces limites pour le rapport entre la rigidité totale d'extension des seconds renforts disposés à l'intérieur de l'armature de carcasse dans chaque bourrelet et la rigidité totale d'extension des seconds renforts disposés à l'extérieur de l'armature de carcasse a l'avantage de rendre plus homogène la sollicitation des seconds renforts dans le bourrelet, quelle que soit leur position.

Selon une autre caractéristique préférentielle, la surface extérieure du bourrelet du pneumatique selon l'invention comportant un siège suivi d'une paroi tronconique d'orientation sensiblement radiale adjacente radialement intérieurement à une paroi de section droite sensiblement en arc de cercle et de centre C disposé extérieurement relativement au bourrelet, ces parois étant destinées à s'appuyer contre le crochet et le rebord d'une jante adaptée, en considérant une ligne CD, traversant le bourrelet du pneumatique en faisant un angle $\alpha$ = +45 $\pm$ 5 degrés relativement à l'axe A du pneumatique, l'ensemble des seconds renforts est disposé à une distance radiale de l'axe du pneumatique inférieure ou égale à cette ligne CD. Cette ligne CD définit sensiblement une zone d'encastrement, très rigide, où les déformations sont très réduites et une zone de flexion radialement au-dessus de CD. Le fait que tous les seconds renforts se trouvent dans la zone d'encastrement renforce l'endurance du bourrelet.

De préférence, le bourrelet du pneumatique selon l'invention ayant une surface extérieure destinée à venir en contact avec la surface correspondante du siège et du crochet de la jante, après montage sur ladite jante et gonflage du pneumatique, la zone de contact entre la surface extérieure du bourrelet et la jante s'étend au moins jusqu'au point B du crochet de rayon maximum $R_J$.

Avantageusement, $\Phi$ étant le diamètre de la circonférence de la surface extérieure du bourrelet destinée à venir s'appuyer contre la circonférence du crochet de la jante de rayon maximum $R_J$, on a :

$$\Phi = 2(R_J - \varepsilon)$$

avec s compris entre 0,5 et 2 mm.

Cela permet au bourrelet de bien venir « s'asseoir » sur le siège et le crochet de la jante et a pour avantage de limiter la courbure prise par les alignements circonférentiels de l'armature de carcasse lors du roulage, particulièrement dans l'aire de contact.

Selon un mode de réalisation avantageux, les premiers renforts de l'armature de carcasse forment des allers et retours disposés de façon adjacente, avec, au niveau de chaque bourrelet, des boucles reliant chaque fois un aller à un retour.

L'armature de sommet du pneumatique pour avion selon l'invention comprend de préférence au moins un bloc de travail avec au moins deux nappes de renforts parallèles dans chaque nappe, orientés sensiblement circonférentiellement et de haut module d'élasticité, avantageusement des renforts constitués de polyamide aromatique.

On entend par « orientation sensiblement circonférentielle » une orientation ne s'écartant pas de plus de cinq degrés de la direction circonférentielle.

Si nécessaire, l'armature de sommet comprenant une zone centrale et deux zones latérales, le bloc de travail comprend en plus deux couches d'éléments de renforcement de haut module d'élasticité, orientés sensiblement circonférentiellement, disposées axialement de part et d'autre du plan médian du pneumatique dans les zones latérales dudit sommet. Ces couches permettent de supporter les efforts dus à la centrifugation à haute vitesse. Elles sont de préférence disposées radialement intérieurement relativement aux deux nappes de renforts orientés circonférentiellement du bloc de travail. Ces deux couches de renforcement ont l'avantage d'augmenter le frettage des zones latérales du sommet sans augmenter son épaisseur.

Une armature de sommet telle que celle-ci correspond par exemple aux pneumatiques du train principal d'un avion.

L'armature de sommet peut comprendre en plus deux nappes de renforts, parallèles entre eux dans chaque nappe et croisés d'une nappe à la suivante en faisant avec la direction circonférentielle un angle α, compris entre 5° et 35° pour renforcer la rigidité de dérive du pneumatique.

Une telle armature de sommet correspond aux pneus directeurs de l'avion, c'est-à-dire par exemple aux « roulettes » disposées sous le cockpit pour le soutenir mais aussi pour diriger l'avion lors des déplacements au sol sur les pistes.

L'armature de sommet peut aussi comprendre, disposée radialement extérieurement relativement au bloc de travail, une nappe sommet de protection. Cette nappe de protection s'étend de préférence axialement au-delà de la largeur axiale des nappes de renforts d'orientation circonférentielle de haut module d'élasticité.

Les caractéristiques et avantages de l'invention seront mieux compris à l'aide de la description qui suit et qui se réfère au dessin annexé illustrant à titre non limitatif des exemples de réalisation et sur lequel :

- la figure 1 présente schématiquement, vu en section axiale, un pneumatique selon l'invention ;
- la figure 2 est une vue en perspective, montrant schématiquement la disposition d'une partie des renforts de l'armature de carcasse ;
- la figure 3 présente un bourrelet d'un second mode de réalisation ;
- la figure 4 présente un troisième mode de réalisation ; et
- la figure 5 présente un quatrième mode de réalisation.

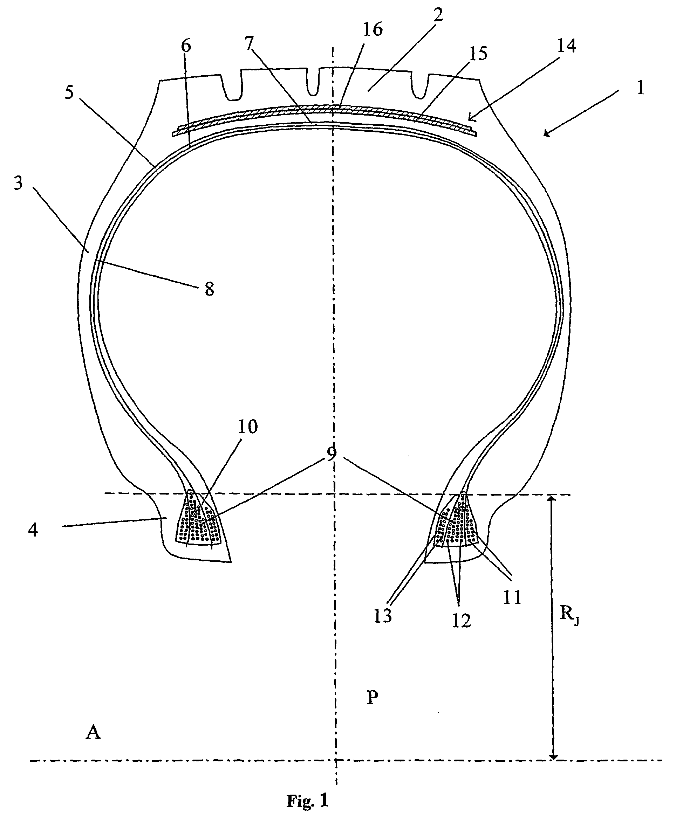

Le pneumatique 1 d'avion représenté schématiquement en demi-coupe axiale à la figure 1 comprend un sommet 2, deux flancs 3 et deux bourrelets 4. Une armature de carcasse 5 s'étend d'un bourrelet à l'autre et est constituée de deux alignements circonférentiels 6 et 7 de premiers renforts. Les alignements circonférentiels de premiers renforts 6 et 7 sont orientées radialement dans les flancs 3 et sont constituées de renforts en polyamide aromatique ou aramide. Les premiers renforts sont disposées parallèlement et sont séparés par une couche de mélange 8 dont la nature et le module sont adaptés en fonction de leur position dans le pneumatique.

L'ancrage des deux alignements circonférentiels 6 et 7 est assuré dans les bourrelets 3 par des alignements ou « piles » 9 de second renforts orientés circonférentiellement et disposés axialement de part et d'autre de chaque alignement circonférentiel de premiers renforts 6 et 7. Chaque alignement ou pile 9 de seconds renforts peut être obtenue par enroulement hélicoïdal d'un renfort. Les premiers renforts, radiaux, et seconds renforts, circonférentiels, sont séparés les uns des autres par une couche de mélange caoutchoutique 10 de très haut module d'élasticité pour éviter tout contact direct d'un renfort avec un autre. Cette couche 10 a une dureté shore A est supérieure à 70. Son module sécant d'extension à 10 % peut aussi être supérieur à 20 MPa et de préférence à 30 MPa.. La tension qui se développe dans les premiers renforts lors du gonflage du pneumatique 1 est reprise notamment par l'adhésion latérale entre chaque alignement circonférentiel 6 et 7 et les piles 9 de renforts circonférentiels. Cette structure de bourrelet assure un excellent ancrage qui reste très efficace même pour les pressions de gonflage très élevées des pneumatiques d'avion, supérieures à 12 bars et pouvant atteindre 25 bars dans certaines applications particulières.

Les piles 9 de seconds renforts sont réparties en trois groupes, deux piles 11 disposées axialement extérieurement à l'armature de carcasse 5 du côté extérieur du pneumatique, deux piles 13 disposées axialement intérieurement relativement à l'armature de carcasse 5, du côté intérieur du pneumatique et 4 piles 12 disposées entre les deux alignements circonférentiels 6 et 7 de l'armature de carcasse 5.

Il est à noter que le second renfort utilisé dans ce pneumatique est un monofilament ou fil unitaire d'acier de diamètre 0,98 mm. Ce renfort est bien entendu adhérisé avec un revêtement laitonné ou zingué. Son usage permet d'obtenir un très faible encombrement pour une très forte rigidité d'extension de l'ensemble des piles 9. Son coût est aussi réduit relativement aux assemblages usuellement utilisés dans les pneumatiques.

De préférence, $\Sigma R_I$ étant la somme des rigidités d'extension des seconds renforts 12 disposés à l'intérieur de l'armature de carcasse 5 et $\Sigma R_E$ étant la somme des rigidités d'extension des seconds renforts 11, 13, disposés de part et d'autre de l'armature de carcasse 5, on a

$$0,6 \leq \frac{\sum R_I}{\sum R_E} \leq 1,5 \qquad \text{et} \qquad \text{avantageusement}$$

$$0,7 \leq \frac{\sum R_I}{\sum R_E} \leq 1,3 \text{ . Dans le cas du pneumatique dé-}$$

crit, en considérant le nombre de spires disposées intérieurement et extérieurement relativement à l'armature de carcasse, on obtient :

$$\Sigma R_I / \Sigma R_E \cong 1,24.$$

Cela a l'avantage d'homogénéiser la sollicitation mécanique des seconds renforts dans le bourrelet.

On peut aussi noter que le nombre de spires des piles diminue progressivement avec la distance relativement à l'axe A du pneumatique 1. Il en résulte une forme sensiblement conique de la disposition des seconds renforts. Cela a pour avantage de stabiliser fortement les bourrelets 4 lors du gonflage du pneumatique et lors du passage dans l'aire de contact en service.

L'ensemble des spires des piles 9 est noyé dans le mélange caoutchoutique 10 de très haut module d'élasticité pour assurer une bonne reprise des efforts dus à la pression de gonflage et ainsi un excellent ancrage de l'armature de carcasse dans les bourrelets 4.

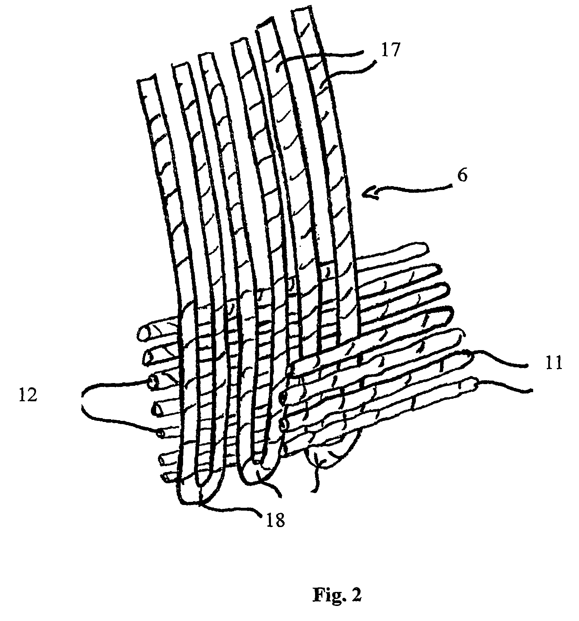

La figure 2 est une vue en perspective de l'un des alignements circonférentiels de premiers renforts, l'alignement 6, dans laquelle seuls les renforts sont représentés. Dans cette figure, on voit l'alignement circonférentiel 6 de premiers renforts qui est constitué de portions de renforts 17. A leurs extrémités radialement inférieures, les portions de renforts 17 forment des boucles 18 juxtaposées, situées dans le bourrelet 4. Ces boucles 18 sont adjacentes et ne se chevauchent pas. De part et d'autre axialement de l'alignement circonférentiel 6 de premiers renforts, sont représentées seulement les piles 11 et 12 directement adjacentes à cet alignement 6. Pour la clarté du dessin, seul l'alignement circonférentiel 6 de premiers renforts et deux piles ont été représentés, mais, l'alignement circonférentiel 7 de premiers renforts présente la même disposition des portions de renforts 17.

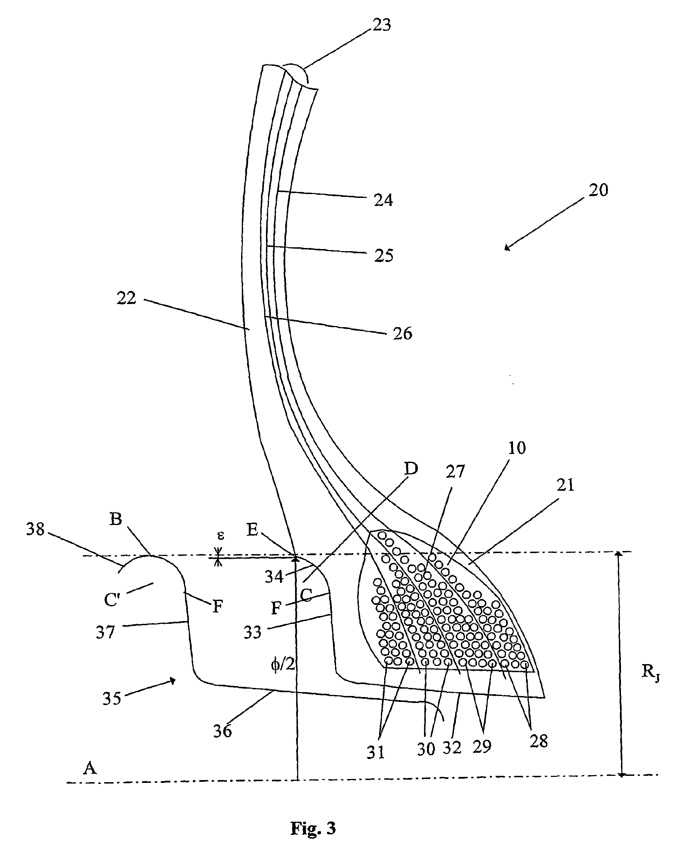

La figure 3 présente un bourrelet 21 et un flanc 22 d'un second mode de réalisation d'un pneumatique 20 selon l'invention dans lequel l'armature de carcasse 23 est constituée de trois alignements circonférentiels, 24, 25, 26, de renforts en polyamide aromatique ou aramide. Dans le bourrelet 21 sont disposées des piles 27 de seconds renforts d'orientation circonférentielle. Ces piles 27 sont ici séparées en quatre groupes. On trouve successivement axialement du côté intérieur du bourrelet vers le côté extérieur, trois piles 28 disposées intérieurement relativement à l'alignement circonférentiel de premiers renforts 24, quatre piles 29 disposées entre les alignements circonférentiels de premiers renforts 24 et 25, trois piles 30 disposées entre les alignements circonférentiels 25 et 26 et trois piles 31 disposées axialement extérieurement relativement à l'alignement 26.

Comme précédemment, les seconds renforts sont constitués de monofilaments ou fils unitaires d'acier et le nombre de spires est tel que l'on vérifie que la somme des rigidités d'extension des piles disposées extérieurement relativement à l'armature de carcasse est sensiblement du même ordre que la somme des rigidités d'extension des piles disposées intérieurement relativement à l'armature de carcasse 23.

La surface extérieure du bourrelet 21 comprend un siège 32, une paroi tronconique d'orientation sensiblement radiale 33 adjacente radialement intérieurement à une paroi 34 dont la section est un arc de cercle EF de centre C. C est disposé à l'extérieur du bourrelet 21. En considérant la ligne CD qui traverse le bourrelet en faisant un angle $\alpha = +45 \pm 5$ degrés relativement à l'axe A du pneumatique (cet angle est déterminé lorsque le pneumatique est monté sur sa jante), on constate que l'ensemble des seconds renforts 27 est disposé à une distance radiale de l'axe A inférieure ou égale à cette ligne CD. Cette ligne CD définit sensiblement une zone d'encastrement très rigide où les déformations sont très réduites et une zone de flexion radialement au-dessus de CD. Le fait que tous les seconds renforts se trouvent dans la zone d'encastrement renforce l'endurance du bourrelet.

Cette surface extérieure du bourrelet est destinée à venir s'appuyer contre la paroi d'une jante 35 dont le profil extérieur est aussi représenté à la figure 3. Ce profil comprend le siège 36 et la paroi sensiblement radiale du crochet 37 suivie du rebord 38. Le rebord 38 a une section droite en arc de cercle de centre C'. Le point de diamètre le plus élevé est B, de rayon $R_J$. Le point E disposé sur la surface axialement extérieure du bourrelet 21 est destiné à venir en contact avec sensiblement le point B. Lorsque le pneumatique est monté sur la jante 35, les surfaces 34 et 38 sont homocentriques, c'est-à-dire que leurs centres C et C' sont confondus. Le point E est disposé sur une circonférence de diamètre $\Phi$. On a la relation :

$$\Phi = 2(R_J - \varepsilon)$$

avec ε compris entre 0,5 et 2 mm.

Ce léger décalage du point E entre sa position libre et sa position montée sur la jante, en contact avec B, permet au bourrelet d'être légèrement mis en extension lors de son montage sur la jante et favorise la qualité du contact obtenu. Ce contact jusqu'au point E renforce la stabilité du bourrelet lors de la mise en pression du pneumatique et lors du passage dans l'aire de contact en service. En conséquence, on constate que les alignements circonférentiels de l'armature de carcasse sont nettement moins sollicités en compression lors du passage dans l'aire de contact contrairement à ce qui se passe pour des pneumatiques d'avion d'architecture classique.

A la figure 1 est aussi présenté un premier exemple d'armature de sommet 14. Celle-ci est constituée d'un bloc de travail comportant deux nappes de renforts 15 et 16 d'orientation sensiblement circonférentielle obtenues par enroulement hélicoïdal d'au moins un renfort. Ce renfort est constitué de renforts en polyamide aromatique ou aramide. Le nombre de nappes de renfort ainsi que le pas de pose sont adaptés en fonction de la dimension du pneumatique et de ses conditions d'utilisation. Ce mode de réalisation d'une armature de sommet a l'avantage de procurer un frettage très efficace qui minimise la variation des dimensions du pneumatique lors du gonflage ainsi qu'à haute vitesse. On constate que l'évolution du profil peut être trois à quatre fois plus faible que pour un pneumatique d'avion usuel tel un 30-7.7R16 AIRX. Cet excellent frettage a aussi l'avantage de ne pas mettre en forte extension les mélanges constituant la bande de roulement du sommet du pneumatique. Les fissurations en surface de la bande de roulement dues à l'ozone présente dans l'air sont fortement réduites.

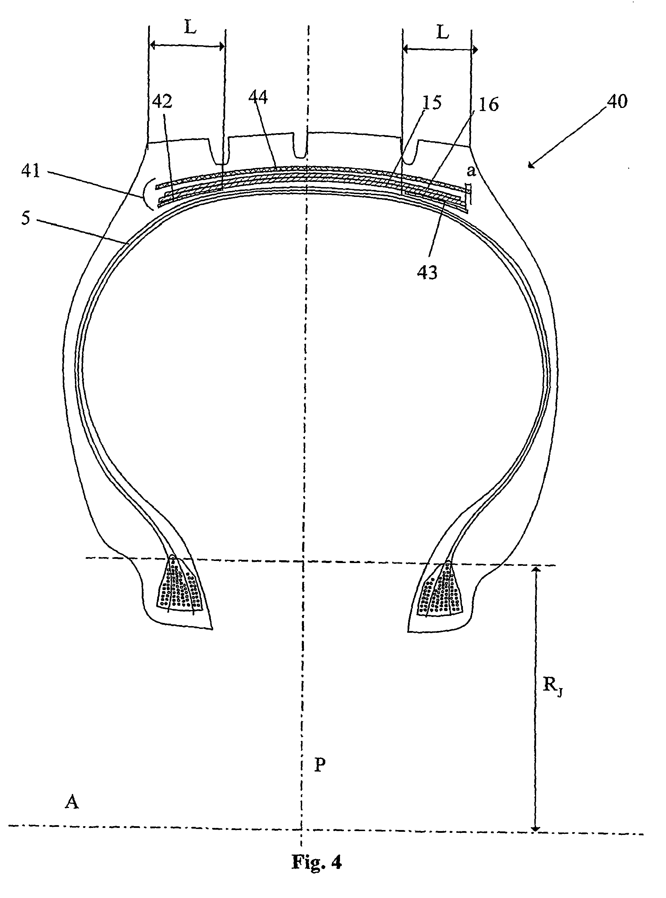

L'armature de sommet 41 du pneumatique 40 présenté à la figure 4 comporte comme précédemment deux nappes de renforts d'orientation sensiblement circonférentielle 15 et 16 et est complétée par deux couches 42 et 43 d'éléments de renforcement de haut module d'élasticité, orientés sensiblement circonférentiellement disposées axialement de part et d'autre du plan médian du pneumatique dans les zones latérales du sommet. Ces couches sont aussi constituées de renforts aromatiques. Elles permettent de renforcer le frettage des zones latérales L du sommet. Les couches 42 et 43 sont disposées radialement entre les nappes 15 et 16 et l'armature de carcasse 5.

L'armature 41 est aussi complétée par une nappe sommet de protection 44 disposée radialement extérieurement relativement aux autres nappes de l'armature de sommet 41.

Cette nappe sommet de protection peut être constituée de renforts métalliques ondulés pour ne pas être sollicités en fonctionnement normal. Il est à noter que cette nappe de protection s'étend axialement au-delà des nappes 15 et 16 de part et d'autre du plan médian P du pneumatique d'une distance axiale a.

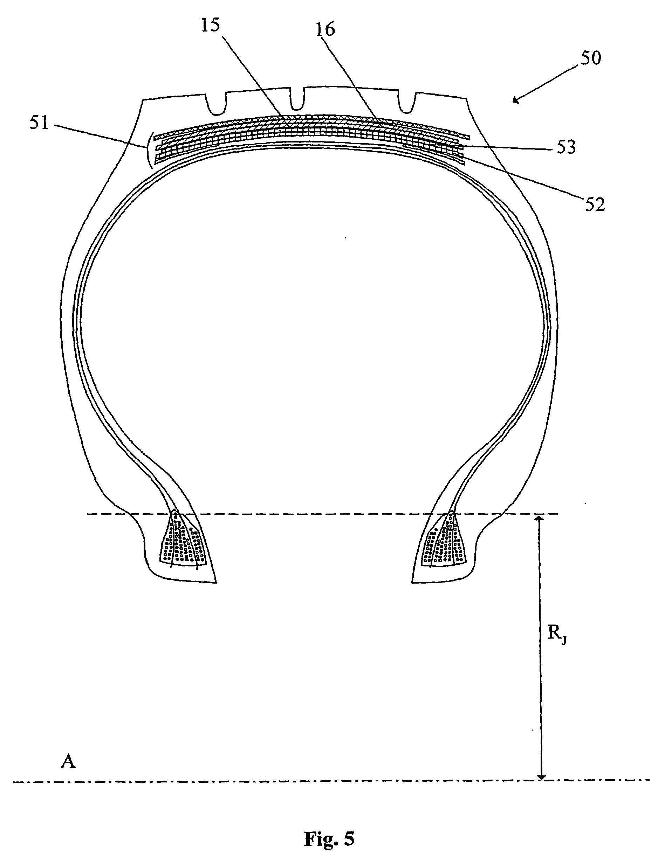

La figure 5 présente un pneumatique 50 avec une armature de sommet 51 comportant en plus deux nappes de renfort 52, 53, parallèles entre eux dans chaque nappe et croisés d'une nappe à la suivante en faisant avec la direction circonférentielle un angle α, compris entre 5° et 35°, les renforts ayant un haut module d'élasticité. Ces deux nappes sont disposées radialement en dessous des nappes de renforts circonférentiels 15 et 16. Elles augmentent la poussée de dérive du pneumatique 30 relativement à celle du pneumatique 40. Ce pneumatique est particulièrement adapté pour servir de pneumatique directeur ou roulette d'un avion.

On a testé un pneumatique selon l'invention de dimension 30 - 7,7 R 16 comportant :

- comme armature de carcasse trois alignements circonférentiels de premiers renforts constitués de retors adhérisé de titre égal à 501 tex élaborés à partir de 3 brins aramide identiques de 167 tex. La densité des premiers renforts est de 88 f/dm dans la zone des bourrelets ;

- comme seconds renforts des monofilaments d'acier de diamètre 0,98 mm et répartis en 13 piles 9 :

  - 3 piles axialement les plus intérieures avec 14, 17 et 20 spires,
  - 4 piles entre les alignements circonférentiels 24 et 25 avec 10, 14, 16 et 20 spires,
  - 3 piles entre les alignements circonférentiels 25 et 26 avec 19, 15 et 10 spires, et
  - 3 piles axialement les plus extérieures avec 14, 10 et 7 spires.

- une armature de sommet avec trois nappes de renforts orientés sensiblement circonférentiellement constitués de retors adhérisés de titre égal à 660 tex élaborés à partir de 2 brins aramides identiques de 330 tex ; les renforts ont un pas de pose de 1,2 mm.

La couche de mélange de très haut module d'élasticité avait un module sécant d'extension de 45 MPa et une dureté shore A de 90.

Ce pneumatique a subi des tests de résistance à l'éclatement et les pressions maximales mesurées ont été de l'ordre de 100 bars. Il est aussi caractérisé par un taux d'allongement de son développement entre la pression nulle et sa pression de service de 15 bars de l'ordre de 1,5 %. Ce pneumatique a aussi subi avec succès des tests de décollage similaires aux tests normalisés pour l'homologation des pneumatiques pour avion.

La confection du pneumatique selon l'invention peut avantageusement être réalisée sur un noyau rigide imposant la forme de sa cavité intérieure, tels ceux décrits par EP 242 840 ou EP 822 047, incorporés par référence dans la présente demande. On applique sur ce noyau, dans l'ordre requis par l'architecture finale, tous les constituants du pneumatique, qui sont disposés directement à leur place finale, sans subir de conformation à aucun moment de la confection. La cuisson s'effectue sur noyau, celui-ci n'étant retiré qu'après la phase de vulcanisation.

Ce mode de fabrication a l'avantage de réduire fortement voire d'éliminer les précontraintes imposées aux renforts, particulièrement à ceux orientés à 0°, lors des phases traditionnelles de conformation

On peut aussi refroidir partiellement le bandage sur le noyau pour maintenir les renforts dans l'état de déformation imposé lors de la pose.

On peut aussi, de manière équivalente, fabriquer le pneumatique sur un tambour tel que décrit dans WO 97/47 463 ou EP 0 718 090, à condition de faire la conformation de l'ébauche du pneumatique avant d'effectuer la pose des renforts orientés circonférentiellement.

On peut encore réaliser la pose des renforts orientés circonférentiellement sur une forme à la géométrie identique à la forme visée dans le moule de cuisson. Le bloc sommet est ensuite assemblé avec l'ébauche complémentaire du pneumatique suivant des techniques de transfert connues de l'homme de l'art, puis, toujours suivant des principes connus, le pneumatique est emboîté et mis sous pression par déploiement d'une membrane à l'intérieur du pneumatique.

Ce mode de réalisation garantit aussi l'absence de précontraintes dues à la conformation en presse de vulcanisation.

## Revendications

**1.** Pneumatique d'avion (1, 20) ayant la capacité de travailler à une pression de gonflage supérieure à 12 bars, comprenant un sommet (2), deux flancs (3) et deux bourrelets (4, 21), une armature de carcasse (5) ancrée dans les deux bourrelets et une armature de sommet dans lequel l'armature de carcasse comprend au moins deux ou trois alignements circonférentiels (6, 7, 24, 25, 26) de premiers renforts dont le module sécant d'extension est supérieur à 1000 cN/Tex, et dans lequel les moyens d'ancrage desdits premiers renforts dans chaque bourrelet comprennent des seconds renforts (9, 11, 12, 13, 27, 28, 29, 30, 31) orientés circonférentiellement bordant axialement lesdits alignements circonférentiels desdits premiers renforts, lesdits premiers renforts et seconds renforts étant séparés par une couche de mélange (10) dont le module sécant d'extension à 10 % et à température ambiante est supérieur à 20 MPa, et de préférence supérieur à 30 MPa.

**2.** Pneumatique d'avion (1, 20) selon la revendication 1, **caractérisé en ce que** chaque alignement circonférentiel desdits premiers renforts est, dans chaque bourrelet, bordé axialement intérieurement et axialement extérieurement par lesdits seconds renforts orientés circonférentiellement.

**3.** Pneumatique d'avion (1, 20) selon l'une des revendications 1 et 2, **caractérisé en ce que** les seconds renforts ont un module supérieur à celui des premiers renforts.

**4.** Pneumatique d'avion (1, 20) selon l'une des revendications 1 à 3, **caractérisé en ce que** lesdits seconds renforts desdits moyens d'ancrage sont constitués de renforts choisis dans le groupe des renforts de carbone, de tungstène, d'aramide haut module ou d'acier.

**5.** Pneumatique d'avion (1, 20) selon la revendication 4, **caractérisé en ce que** lesdits seconds renforts desdits moyens d'ancrage sont constitués de monofilaments ou fils unitaires d'acier.

**6.** Pneumatique d'avion (1, 20) selon la revendication 5, **caractérisé en ce que** le diamètre desdits monofilaments d'acier est compris entre 0,7 et 1,3 mm.

**7.** Pneumatique d'avion (1, 20) selon l'une des revendications 1 à 6, **caractérisé en ce que**, en considérant $\Sigma R_1$ somme des rigidités d'extension des seconds renforts disposés axialement entre les alignements les plus extrêmes de la carcasse et en considérant $\Sigma R_E$ somme des rigidités d'extension des seconds renforts disposés axialement de part et d'autre de l'armature de carcasse, on a :

$$0,6 \le \frac{\sum R_I}{\sum R_E} \le 1,5$$

**8.** Pneumatique d'avion (1, 20) selon la revendication 7, **caractérisé en ce que** :

$$0,7 \le \frac{\sum R_I}{\sum R_E} \le 1,3$$

**9.** Pneumatique d'avion (1, 20) selon l'une des revendications 1 à 8, **caractérisé en ce que** la surface extérieure des bourrelet comprenant un siège, une paroi tronconique d'orientation sensiblement radiale adjacente radialement intérieurement à une paroi dont la section est un arc de cercle EF de centre C **et en ce que,** en considérant une ligne CD traversant le bourrelet en faisant un angle $\alpha$ = +45 $\pm$ 5 degrés relativement à l'axe A du pneumatique, l'ensemble des seconds renforts est disposé radialement intérieurement relativement à ladite ligne CD.

**10.** Pneumatique d'avion selon l'une des revendications 1 à 9, **caractérisé en ce que** lesdits premiers renforts de l'armature de carcasse forment des allers et retours disposés de façon adjacente, avec, au niveau de chaque bourrelet, des boucles reliant chaque fois un aller à un retour.

11. Pneumatique d'avion selon l'une des revendications 1 à 10, **caractérisé en ce que** ladite armature de sommet comprend au moins un bloc de travail avec au moins deux nappes de renforts parallèles dans chaque nappe, orientés sensiblement circonférentiellement et dont le module sécant d'extension est supérieur à 1000 cN/Tex.

12. Pneumatique d'avion selon la revendication 11, **caractérisé en ce que** ledit sommet comprenant une zone centrale et deux zones latérales, ledit bloc de travail comprend en plus deux couches d'éléments de renforcement, dont le module sécant d'extension est supérieur à 1000 cN/Tex, orientés sensiblement circonférentiellement, disposées axialement de part et d'autre du plan médian du pneumatique dans les zones latérales dudit sommet.

13. Pneumatique d'avion selon la revendication 12, **caractérisé en ce que** lesdites deux couches dudit bloc de travail sont disposées radialement sous lesdites deux nappes de renforts orientés circonférentiellement dudit bloc de travail.

14. Pneumatique d'avion selon l'une des revendications 11 à 13, **caractérisé en ce que** ledit bloc de travail comprend en plus deux nappes de renforts, parallèles entre eux dans chaque nappe et croisés d'une nappe à la suivante en faisant avec la direction circonférentielle un angle $\alpha$, compris entre 5° et 35°, lesdits renforts dont le module sécant d'extension est supérieur à 1000 cN/Tex.

15. Pneumatique d'avion selon l'une des revendications 11 à 14, **caractérisé en ce que** ladite armature de sommet comprend en plus, disposé radialement extérieurement relativement audit bloc de travail, une nappe de protection s'étendant axialement au-delà de la largeur axiale de ladite ou desdites nappes de renforts dont le module sécant d'extension est supérieur à 1000 cN/Tex.

16. Pneumatique d'avion selon la revendication 1 à 15, **caractérisé en ce que** les renforts dont le module sécant d'extension est supérieur à 1000 cN/Tex sont constitués de polyamide aromatique.

17. Pneumatique d'avion selon l'une des revendications 1 à 16, **caractérisé en ce que** la couche de mélange dont le module sécant d'extension à 10 % est supérieur à 20 MPa, a une dureté shore A supérieure à 70.

18. Ensemble monté pour avion constitué d'un pneumatique (1, 20), tel que défini selon l'une des revendications 1 à 17, et d'une jante (35) comprenant des sièges (36) et des crochets (37), les bourrelets ayant des surfaces extérieures destinées à venir en contact avec la surface correspondante des sièges et des crochets de ladite jante, après montage sur ladite jante et gonflage dudit pneumatique, **caractérisé en ce que** la zone de contact entre ladite surface extérieure dudit bourrelet et ladite jante s'étend au moins jusqu'au point B du crochet de rayon maximum $R_J$.

19. Ensemble monté pour avion selon la revendication 18, **caractérisé en ce que** $\Phi$ étant le diamètre de la circonférence de la surface extérieure du bourrelet destinée à venir s'appuyer contre la circonférence du crochet de la jante de rayon maximum $R_J$, on a :

$$\Phi = 2(R_J - \varepsilon)$$

avec $\varepsilon$ compris entre 0,5 et 2 mm.

**Patentansprüche**

1. Flugzeugreifen (1, 20), der die Fähigkeit aufweist, bei einem Reifenfülldruck von über 12 Bar zu arbeiten, umfassend einen Scheitel (2), zwei Seitenwände (3) und zwei Wülste (4, 21), eine Karkassen-Einlage (5), die in den zwei Wülsten verankert ist, und eine Scheitel-Einlage, wobei die Karkassen-Einlage mindestens zwei oder drei Umfangsanordnungen (6, 7, 24, 25, 26) von ersten Verstärkungen umfaßt, deren Sekantenmodul für die Dehnung größer ist als 1000 cN/Tex, und wobei die Verankerungsmittel dieser ersten Verstärkungen in jedem Wulst zweite Verstärkungen (9, 11, 12, 13, 27, 28, 29, 30, 31) umfassen, die in der Umfangsrichtung orientiert sind, wobei sie die Umfangsanordnungen der ersten Verstärkungen axial einfassen, wobei diese ersten Verstärkungen und zweiten Verstärkungen durch eine Mischschicht (10) getrennt sind, deren Sekantenmodul für die Dehnung bei 10% und bei Umgebungstemperatur größer ist als 20 MPa, und bevorzugt größer als 30 MPa.

2. Flugzeugreifen (1, 20) nach Anspruch 1, **dadurch gekennzeichnet, daß** jede Umfangsanordnung der ersten Verstärkungen in jedem Wulst axial innen und axial außen von den zweiten Verstärkungen eingefaßt wird, die in der Umfangsrichtung orientiert sind.

3. Flugzeugreifen (1, 20) nach einem der Ansprüche 1 und 2, **dadurch gekennzeichnet, daß** die zweiten Verstärkungen ein Modul aufweisen, das größer als das der ersten Verstärkungen ist.

4. Flugzeugreifen (1, 20) nach einem der Ansprüche 1 bis 3, **dadurch gekennzeichnet, daß** die zweiten Verstärkungen der Verankerungsmittel Verstärkungen sind, die aus der Gruppe der Carbonverstärkungen, Wolframverstärkungen, Aramidverstärkungen mit hohem Modul oder Stahlverstärkungen gewählt werden.

5. Flugzeugreifen (1, 20) nach Anspruch 4, **dadurch gekennzeichnet, daß** die zweiten Verstärkungen der Verankerungsmittel aus Monofilamenten oder Einzelfäden aus Stahl bestehen.

6. Flugzeugreifen (1, 20) nach Anspruch 5, **dadurch gekennzeichnet, daß** der Durchmesser dieser Stahlmonofilamente zwischen 0,7 und 1,3 mm liegt.

7. Flugzeugreifen (1, 20) nach einem der Ansprüche 1 bis 6, **dadurch gekennzeichnet, daß**, wenn $\Sigma R_1$ die Summe der Dehnungssteifigkeiten der zweiten Verstärkungen ist, die axial zwischen den äußersten Anordnungen der Karkasse angeordnet sind, und wenn $\Sigma R_2$ die Summe der Dehnungssteifigkeiten der zweiten Verstärkungen ist, die axial beiderseits der Karkassen-Einlage angeordnet sind, gilt:

$$0,6 \leq \frac{\sum R_I}{\sum R_E} \leq 1,5$$

8. Flugzeugreifen (1, 20) nach Anspruch 7, **dadurch gekennzeichnet, daß**:

$$0,7 \leq \frac{\sum R_I}{\sum R_E} \leq 1,3$$

9. Flugzeugreifen (1, 20) nach einem der Ansprüche 1 bis 8, **dadurch gekennzeichnet, daß** die Außenfläche der Wülste einen Sitz, eine kegelstumpfförmige Wand mit im wesentlichen radialer Orientierung, die radial innen an eine Wand angrenzt, deren Querschnitt ein Kreisbogen EF mit einem Zentrum C ist, umfaßt und dadurch, daß, wenn eine Linie CD, die den Wulst durchquert und einen Winkel $\alpha = + 45 \pm 5$ Grad relativ zur Achse A des Reifens bildet, die Gesamtheit der zweiten Verstärkungen relativ zu dieser Linie CD radial innen angeordnet ist.

10. Flugzeugreifen nach einem der Ansprüche 1 bis 9, **dadurch gekennzeichnet, daß** die ersten Verstärkungen der Karkassen-Einlage Hin- und Rückläufe formen, die auf angrenzende Weise angeordnet sind, mit Schlingen auf der Höhe jedes Wulstes, die jedesmal einen Hinlauf mit einem Rücklauf verbinden.

11. Flugzeugreifen nach einem der Ansprüche 1 bis 10, **dadurch gekennzeichnet, daß** die Scheitel-Einlage mindestens einen Arbeitsblock mit mindestens zwei parallelen Verstärkungslagen in jeder Lage umfaßt, die im wesentlichen in der Umfangsrichtung orientiert sind und deren Sekantenmodul für die Dehnung größer als 1000 cN/Tex ist.

12. Flugzeugreifen nach Anspruch 11, **dadurch gekennzeichnet, daß** der Scheitel eine zentrale Zone und zwei seitliche Zonen umfaßt, der Arbeitsblock darüber hinaus zwei Schichten Verstärkungselemente umfaßt, deren Sekantenmodul für die Dehnung größer als 1000 cN/Tex ist, die im wesentlichen in der Umfangsrichtung orientiert sind, axial beiderseits der Medianebene des Reifens in den seitlichen Zonen des Scheitels angeordnet sind.

13. Flugzeugreifen nach Anspruch 12, **dadurch gekennzeichnet, daß** die zwei Schichten des Arbeitsblocks radial unter den zwei Verstärkungslagen angeordnet sind, die in der Umfangsrichtung des Arbeitsblocks orientiert sind.

14. Flugzeugreifen nach einem der Ansprüche 11 bis 13, **dadurch gekennzeichnet, daß** der Arbeitsblock außerdem Verstärkungslagen umfaßt, die in jeder Lage parallel zueinander liegen und sich von einer Lage zur nächsten kreuzen, wobei sie zur Umfangsrichtung einen Winkel $\alpha$ bilden, der zwischen 5° und 35° liegt, wobei das Sekantenmodul für die Dehnung der Verstärkungen größer ist als 1000 cN/Tex.

15. Flugzeugreifen nach einem der Ansprüche 11 bis 14, **dadurch gekennzeichnet, daß** die Scheitel-Einlage außerdem, radial außen relativ zum Arbeitsblock angeordnet, eine Schutzlage umfaßt, die sich axial über die axiale Breite der Verstärkungslage(n) hinaus erstreckt, deren Sekantenmodul für die Dehnung größer als 1000 cN/Tex ist.

16. Flugzeugreifen nach einem der Ansprüche 1 bis 15, **dadurch gekennzeichnet, daß** die Verstärkungen, deren Sekantenmodul für die Dehnung größer ist als 1000 cN/Tex, aus aromatischem Polyamid bestehen.

17. Flugzeugreifen nach einem der Ansprüche 1 bis 16, **dadurch gekennzeichnet, daß** die Mischschicht, deren Sekantenmodul für die Dehnung bei 10% größer ist als 20 MPa, eine Shore A-Härte von über 70 aufweist.

**18.** Baugruppe für ein Flugzeug, bestehend aus einem Reifen (1, 20), wie nach einem der Ansprüche 1 bis 17 definiert, und einer Felge (35), umfassend Sitze (36) und Haken (37), wobei die Wülste Außenflächen aufweisen, die dazu bestimmt sind, nach der Felgenmontage und dem Aufpumpen des Reifens mit der entsprechenden Fläche der Sitze und Haken der Felge in Kontakt zu kommen, **dadurch gekennzeichnet, daß** sich die Kontaktzone zwischen dieser Außenfläche des Wulstes und der Felge mindestens bis zum Punkt B des Hakens mit dem Höchstradius $R_J$ erstreckt.

**19.** Baugruppe für ein Flugzeug nach Anspruch 18, **dadurch gekennzeichnet, daß**, wenn $\Phi$ der Durchmesser des Umfangs der Außenfläche des Wulstes ist, der dazu bestimmt ist, gegen den Umfang des Hakens der Felge mit dem Höchstradius $R_J$ zum Aufliegen zu kommen, gilt:

$$\Phi = 2(R_J - \varepsilon)$$

wobei $\varepsilon$ zwischen 0,5 und 2 mm liegt.

**Claims**

**1.** Aircraft tyre (1, 20) having the capacity to work at an inflation pressure of greater than 12 bar, comprising a crown (2), two sidewalls (3) and two beads (4, 21), a carcass reinforcement (5) anchored in the beads and a crown reinforcement, in which tyre the carcass reinforcement comprises at least two or three circumferential alignments (6, 7, 24, 25, 26) of first reinforcing members, the secant modulus of extension of which is greater than 1000 cN/tex, and in which the means of anchoring said first reinforcing members in each bead comprise circumferentially oriented second reinforcing members (9, 11, 12, 13, 27, 28, 29, 30, 31) axially bordering said circumferential alignments of said first reinforcing members, said first and second reinforcing members being separated by a layer (10) of compound whose secant modulus at 10% extension and at room temperature is greater than 20 MPa, preferentially greater than 30 MPa.

**2.** Aircraft tyre (1, 20) according to Claim 1, **characterized in that** each circumferential alignment of said first reinforcing members is, in each bead, bordered axially, both on the inside and on the outside, by said circumferentially oriented second reinforcing members.

**3.** Aircraft tyre (1, 20) according to either of Claims 1 and 2, **characterized in that** the second reinforcing members have a higher modulus than the first reinforcing members.

**4.** Aircraft tyre (1, 20) according to one of Claims 1 to 3, **characterized in that** said second reinforcing members of said anchoring means consist of reinforcing members chosen from the group of carbon, tungsten, high-modulus aramid and steel reinforcing members.

**5.** Aircraft tyre (1, 20) according to Claim 4, **characterized in that** said second reinforcing members of said anchoring means consist of individual steel wires or monofilaments.

**6.** Aircraft tyre (1, 20) according to Claim 5, **characterized in that** the diameter of said steel monofilaments is between 0.7 and 1.3 mm.

**7.** Aircraft tyre (1, 20) according to one of Claims 1 to 6, **characterized in that**, expressing the sum of the extensional rigidity moduli of the second reinforcing members placed axially between the most extreme alignments of the carcass as $\Sigma R_I$ and expressing the sum of the extensional rigidity moduli of the second reinforcing members placed axially on either side of the carcass reinforcement as $\Sigma R_E$:

$$0.6 \leq \frac{\Sigma R_1}{\Sigma R_E} \leq 1.5.$$

**8.** Aircraft tyre (1, 20) according to Claim 7, **characterized in that**:

$$0.7 \leq \frac{\Sigma R_1}{\Sigma R_E} \leq 1.3.$$

**9.** Aircraft tyre (1, 20) according to one of Claims 1 to 8, **characterized in that** the outer surface of the beads comprises a seat, a frustoconical wall of substantially radial orientation radially adjacent, on the inside, to a wall whose cross section is a circular arc EF of centre C and **in that**, considering a line CD passing through the bead making an angle $\alpha = +45 \pm 5$ degrees to the axis A of the tyre, all of the second reinforcing members lie radially on the inside relative to said line CD.

**10.** Aircraft tyre according to one of Claims 1 to 9, **characterized in that** said first reinforcing members of the carcass reinforcement form adjacently disposed segments going radially outwards and then returning, with, at each bead, loops connecting each time an outward-going segment to a return segment.

**11.** Aircraft tyre according to one of Claims 1 to 10, **characterized in that** said crown reinforcement comprises at least one working block with at least two plies of reinforcing members that are parallel in each ply, these being oriented approximately circumferentially and having a secant modulus of extension of greater than 1000 cN/tex.

**12.** Aircraft tyre according to Claim 11, **characterized in that** said crown comprising a central region and two lateral regions, said working block additionally comprises two layers of reinforcing elements whose secant modulus of extension is greater than 1000 cN/tex, which are oriented approximately circumferentially and lie axially on either side of the mid-plane of the tyre in the lateral regions of said crown.

**13.** Aircraft tyre according to Claim 12, **characterized in that** said two layers of said working block lie radially beneath said two plies of circumferentially oriented reinforcing members of said working block.

**14.** Aircraft tyre according to one of Claims 11 to 13, **characterized in that** said working block additionally comprises two plies of reinforcing members, which are mutually parallel in each ply and crossed from one ply to the next, making an angle $\alpha$ of between 5° and 35° with the circumferential direction, said reinforcing members whose secant modulus of extension is greater than 1000 cN/tex.

**15.** Aircraft tyre according to one of Claims 11 to 14, **characterized in that** said crown reinforcement additionally comprises, placed radially externally relative to said working block, a protective ply lying axially beyond the axial width of said ply or plies of reinforcing members whose secant modulus of extension is greater than 1000 cN/tex.

**16.** Aircraft tyre according to Claims 1 to 15, **characterized in that** the reinforcing members whose secant modulus of extension is greater than 1000 cN/tex are made of an aromatic polyamide.

**17.** Aircraft tyre according to one of Claims 1 to 16, **characterized in that** the layer of compound whose secant modulus at 10% extension is greater than 20 MPa has a Shore A hardness of greater than 70.

**18.** Fitted assembly for an aircraft, consisting of a tyre (1, 20), as defined according to one of Claims 1 to 17, and of a rim (35) comprising seats (36) and gutters (37), the beads having outer surfaces that are intended to come into contact with the corresponding surface of the seats and of the gutters of said rim, after said tyre has been fitted on to said rim and inflated, **characterized in that** the contact region, for contact between said outer surface of said bead and said rim, extends at least as far as the point B of the gutter of maximum radius $R_J$.

**19.** Fitted assembly for an aircraft according to Claim 18, **characterized in that**, taking $\Phi$ as the diameter of the circumference of the outer bead surface intended to bear against the circumference of the rim gutter of maximum radius $R_J$:

$$\Phi = 2(R_J - \varepsilon)$$

where $\varepsilon$ lies between 0.5 and 2 mm.

**Fig. 1**

**Fig. 2**

Fig. 3

**Fig. 4**

**Fig. 5**